# EUROPEAN PATENT APPLICATION

(11) **EP 4 668 978 A1**
(43) Date of publication of application: **24.12.2025**
(21) Application number: 23922774.7
(22) Date of filing: 17.02.2023
(51) Int. Cl.: H04W 72/232, H04W 28/06, H04W 72/0457

(54) **TERMINAL AND WIRELESS BASE STATION**

(71) Applicant: NTT DOCOMO, INC., Tokyo 100-6150 (JP)
(72) Inventor: OKANO Mayuko, Tokyo 100-6150 (JP); HARADA Hiroki, Tokyo 100-6150 (JP); OKAMURA Masaya, Tokyo 100-6150 (JP)
(74) Representative: Hoffmann Eitle
(86) International application number: PCT/JP2023/005763
(87) International publication number: WO 2024/171440

(57) **Abstract**

A terminal receives a specific downlink control information for scheduling a channel to be transmitted on a plurality of carriers, and controls transmission or reception of the channel, based on the specific downlink control information. The terminal assumes that, in frequency domain resource allocation based on a bitmap, granularity to be applied to a resource block group is extended beyond granularity to be applied to a downlink control information other than the specific downlink control information.

## Description

### [Technical Field]

The present disclosure relates to a terminal and a radio base station that support a mechanism of scheduling a data channel (s) to be transmitted on multiple carriers, using a single downlink control information to be transmitted on a specific carrier.

### [Background Art]

The 3rd Generation Partnership Project (3GPP: registered trademark) has prepared a specification for the 5th generation mobile communication system (also called 5G, New Radio (NR), or Next Generation (NG)) and is also preparing next generation specifications called Beyond 5G, 5G Evolution, or 6G.

For example, regarding a DCI (Downlink Control Information), in 3GPP Releases 16 and 17, a function of scheduling PDSCH(s) (Physical Downlink Shared Channel (s)) / PUSCH (s) (Physical Uplink Shared Channel (s)) to be transmitted on multiple slots, using a single DCI (referred to as single DCI multi-slot PDSCH/PUSCH scheduling) is specified (Non-Patent Literature 1).

In 3GPP Release 18, introduction of a function for scheduling PDSCH(s)/PUSCH(s) to be transmitted on multicomponent carriers (CCs), using a single DCI is considered (Non-Patent Literature 2). Such a function is called Single DCI Multi-carrier PDSCH/PUSCH scheduling or Single DCI Multi-Cell PDSCH/PUSCH scheduling (described below as Single DCI Multi-carrier PDSCH/PUSCH scheduling).

The Single DCI Multi-carrier PDSCH/PUSCH scheduling can reduce load (number of blind decodes (BDs)) due to monitoring of DCIs (PDCCHs), compared to a conventional method of preparing a DCI for each CC and performing scheduling. In addition, the total PDCCH overhead can be reduced.

### [Citation List]

### [Non-Patent Literature]

[Non-Patent Literature 1]
   3GPP TS 38.212 V17.4.0, 3rd Generation Partnership Project; Technical Specification Group Radio Access Network; NR; Multiplexing and channel coding (Release 17), 3GPP, December 2022
[Non-Patent Literature 2]
   "New WID on Multi-carrier enhancements", RP-213577, 3GPP TSG RAN Meeting #94e, 3GPP, December 2021

### [Summary of Invention]

In contrast, the Single DCI Multi-carrier PDSCH/PUSCH scheduling has the following issue regarding a DCI size. Specifically, since a field in which a different configuration for each CC can be provided is included therein, the filed size in the DCI increases, which limits applicable configurations.

In view of this situation, a reduction of the DCI size is considered, but it is not easy to reduce the DCI size without significantly compromising scheduling flexibility.

Accordingly, the following disclosure has been made in view of this situation, and an object thereof is to provide a terminal and a radio base station that can use a downlink control information (DCI) having a reduced size while ensuring scheduling flexibility, when the Single DCI Multi-carrier PDSCH/PUSCH scheduling is applied.

An aspect of the disclosure is a terminal (UE 200) including: a receiving unit (control signal and reference signal processing unit 240) that receives a downlink control information for scheduling a channel to be transmitted on a plurality of carriers; and a control unit (control unit 270) that controls transmission or reception of the channel, based on the specific downlink control information, wherein the control unit assumes that, in frequency domain resource allocation based on a bitmap, granularity to be applied to a resource block group is extended beyond granularity to be applied to a downlink control information other than the specific downlink control information.

Another aspect of the disclosure is a terminal (UE 200) including: a receiving unit (control signal and reference signal processing unit 240) that receives a single specific downlink control information for scheduling a channel to be transmitted on a plurality of carriers; and a control unit (control unit 270) that controls transmission or reception of the channel, based on the specific downlink control information, wherein the control unit assumes that, in frequency domain resource allocation based on interlacing, granularity of resource allocation is a resource block group.

Another aspect of the disclosure is a terminal (UE 200) including: a receiving unit (control signal and reference signal processing unit 240) that receives a single specific downlink control information for scheduling a channel to be transmitted on a plurality of carriers; and a control unit (control unit 270) that controls transmission or reception of the channel, based on the specific downlink control information, wherein the control unit determines a notification target cell of a field for indicating a value to only a specific cell among a plurality of scheduling target cells, based on an element other than the specific downlink control information.

Another aspect of the disclosure is a radio base station (gNB 100) including: a transmitting unit (control signal and reference signal processing unit 240) that transmits a single specific downlink control information for scheduling a channel to be transmitted on a plurality of carriers; and a control unit (control unit 270) that executes a configuration of the specific downlink control information, wherein the control unit extends, in frequency domain resource allocation based on a bitmap, granularity to be applied to a resource block group beyond granularity to be applied to a downlink control information other than the specific downlink control information.

Another aspect of the disclosure is a radio base station (gNB 100) including: a transmitting unit (control signal and reference signal processing unit 240) that transmits a single specific downlink control information for scheduling a channel to be transmitted on a plurality of carriers; and a control unit (control unit 270) that executes a configuration of the specific downlink control information, wherein the control unit uses granularity of resource allocation as a resource block group in frequency domain resource allocation based on interlacing.

### [Brief Description of Drawings]

[FIG. 1] FIG. 1 is an overall schematic configuration diagram of a radio communication system 10.
[FIG. 2] FIG. 2 is a diagram illustrating frequency bands used in the radio communication system 10.
[FIG. 3] FIG. 3 is a diagram illustrating a configuration example of a radio frame, a subframe, and a slot used in the radio communication system 10.
[FIG. 4] FIG. 4 is a functional block configuration diagram of a gNB 100 and a UE 200.
[FIG. 5] FIG. 5 is a diagram illustrating an example of a scheduling method that can be supported by the radio communication system 10.
[FIG. 6] FIG. 6 is a diagram illustrating a configuration example of RBG granularity for resource allocation according to operation example 1.
[FIG. 7] FIG. 7 is a diagram illustrating an example of resource allocation using RA type 2 according to operation example 1.
[FIG. 8] FIG. 8 is a diagram illustrating an operation flow for determining a notification target cell according to operation example 2.
[FIG. 9] FIG. 9 is a diagram illustrating a hardware configuration example of the gNB 100 and the UE 200.
[FIG. 10] FIG. 10 is a diagram illustrating a configuration example of a vehicle 2001.

### [Description of Embodiments]

Hereinafter, an embodiment will be described based on the drawings. Note that the same functions and configurations are denoted by the same or similar reference signs, and their descriptions will be omitted as appropriate.

### (1) Overall Schematic Configuration of Radio Communication System

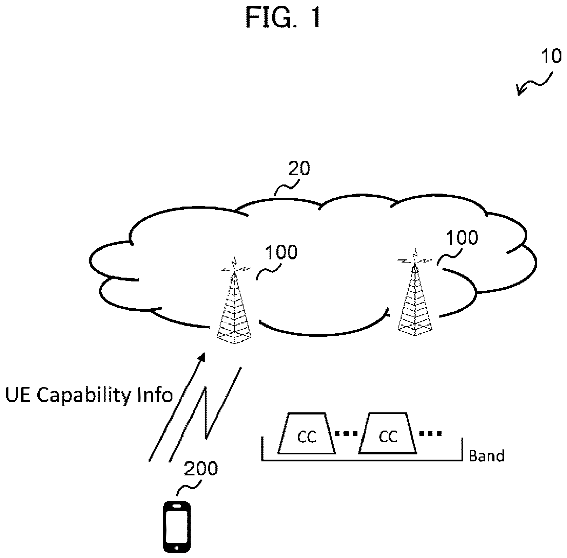

FIG. 1 is an overall schematic configuration diagram of a radio communication system 10 according to the embodiment. The radio communication system 10 is a radio communication system according to 5G New Radio (NR), and includes a Next Generation-Radio Access Network 20 (hereinafter, NG-RAN 20) and a terminal 200 (User Equipment 200, hereinafter UE 200).

Note that the radio communication system 10 may be a radio communication system according to a scheme called Beyond 5G, 5G Evolution, or 6G.

The NG-RAN 20 includes a radio base station 100 (hereinafter, gNB 100). Note that the specific configuration of the radio communication system 10 including the number of gNBs and UEs is not limited to that of the example illustrated in FIG. 1.

The NG-RAN 20 actually includes multiple NG-RAN Nodes, specifically, gNBs (or ng-eNBs), and is connected to a core network (5GC, not illustrated) according to 5G. Note that the NG-RAN 20 and 5GC may be simply expressed as a "network".

The gNB 100 is a radio base station according to NR, and performs radio communication with the UE 200 according to NR. The gNB 100 and the UE 200 can be compatible with Massive MIMO that generates a beam with higher directivity by controlling radio signals transmitted from multiple antenna elements, carrier aggregation (CA) that uses multiple component carriers (CCs) in a bundle, dual connectivity (DC) where communication is performed at the same time between the UE and each of multiple NG-RAN Nodes, and the like.

The type of DC may be a Multi-RAT Dual Connectivity (MR-DC) that utilizes multiple radio access technologies, or an NR-NR Dual Connectivity (NR-DC) that utilizes only NR. The MR-DC may be an E-UTRA-NR Dual Connectivity (EN-DC) where an eNB constitutes a master node (MN), and a gNB constitutes a secondary node (SN), or vice versa, an NR-E-UTRA Dual Connectivity (NE-DC).

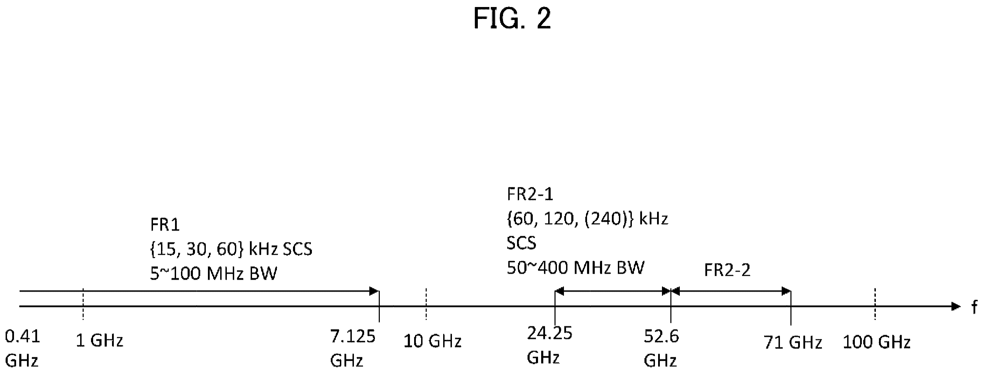

In addition, the radio communication system 10 may be compatible with multiple frequency ranges (FRs). FIG. 2 is a diagram illustrating frequency bands used in the radio communication system 10.

- FR1: 410 MHz to 7.125 GHz
- FR2:
   - FR2-1: 24.25 GHz to 52.6 GHz
   - FR2-2: more than 52.6 GHz to 71 GHz

In FR1, a Sub-Carrier Spacing (SCS) of 15, 30, or 60 kHz may be used, and a bandwidth (BW) of 5 to 100 MHz may be used. FR2 has a higher frequency than FR1, an SCS of 60 or 120 kHz (240 kHz may be included) may be used, and a bandwidth (BW) of 50 to 400 MHz may be used.

Furthermore, the radio communication system 10 may support a higher frequency band than the frequency band of FR2. Specifically, the radio communication system 10 may support a frequency band beyond 52.6 GHz, up to 114.25 GHz.

Furthermore, Cyclic Prefix-Orthogonal Frequency Division Multiplexing (CP-OFDM) or Discrete Fourier Transform-Spread-Orthogonal Frequency Division Multiplexing (DFT-S-OFDM), having a larger SCS, may be applied. Further, DFT-S-OFDM may be applied not only for uplink (UL) but also for downlink (DL).

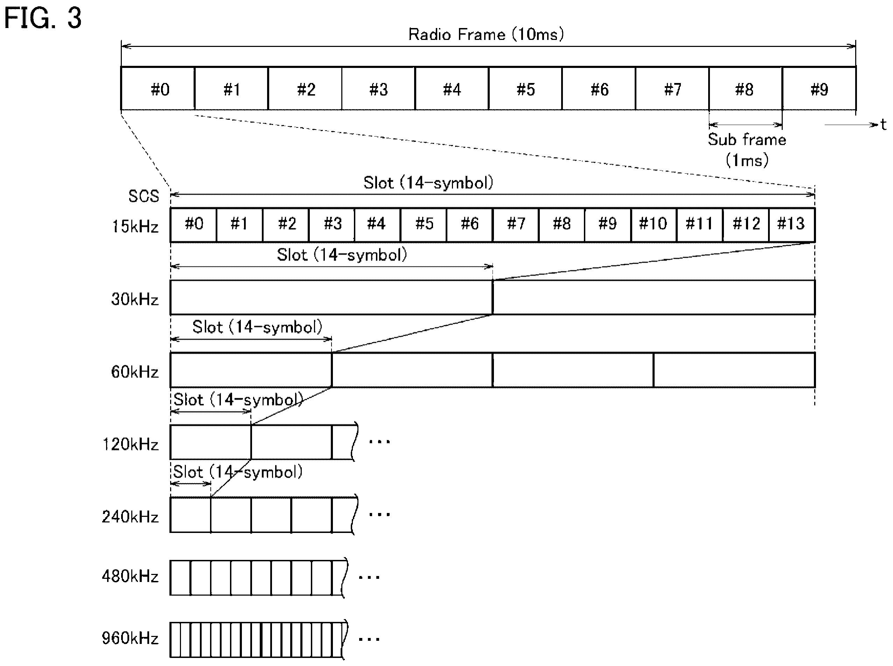

FIG. 3 is a diagram illustrating a configuration example of a radio frame, a subframe, and a slot used in the radio communication system 10.

As illustrated in FIG. 3, one slot includes 14 symbols, and a symbol period (and a slot period) becomes shorter as the SCS becomes larger (wider). Note that the number of symbols constituting one slot is not necessarily 14 symbols (for example, 28 symbols or 56 symbols). Further, the number of slots per subframe may be different depending on the SCS. Furthermore, the SCS may be wider than 240 kHz (for example, 480 kHz or 960 kHz as illustrated in FIG. 2).

Note that, a time direction (t) illustrated in FIG. 2 may be called a time domain, a symbol period, a symbol time, or the like. In addition, a frequency direction may be called a frequency domain, a resource block (RB), a resource block group (RBG), a subcarrier, a Bandwidth Part (BWP), or the like.

In the radio communication system 10, a function related to multiple carriers (specifically, CCs) may be extended as described above. More specifically, the radio communication system 10 supports a function (single DCI multi-slot PDSCH/PUSCH scheduling) for scheduling PDSCH(s) (Physical Downlink Shared Channel(s)) / PUSCH(s) (Physical Uplink Shared Channel(s)) to be transmitted on multiple slots, using a single DCI (Downlink Control Information).

More specifically, the radio communication system 10 may support a scheduling method (self-carrier scheduling) where a scheduling DCI and a scheduling target channel are for the same CC, a scheduling method (cross carrier scheduling) where channel scheduling across multiple CCs is applied, and a scheduling method (multi-carrier scheduling) where a channel(s) is(are) allocated to multiple different CCs using a single DCI, that is one DCI.

More specifically, the radio communication system 10 may support a function (Single DCI Multi-carrier PDSCH/PUSCH scheduling or Single DCI Multi-Cell PDSCH/PUSCH scheduling) for scheduling PDSCH(s)/PUSCH(s) to be transmitted on multiple CCs, using a single DCI. Description of the Single DCI Multi-carrier PDSCH/PUSCH scheduling will be used below.

Only one of the single DCI multi-slot PDSCH/PUSCH scheduling and the Single DCI Multi-carrier PDSCH/PUSCH scheduling may be usable, and both need not be usable simultaneously. However, the radio communication system 10 may support simultaneous use of both.

### (2) Functional Block Configuration of Radio Communication System

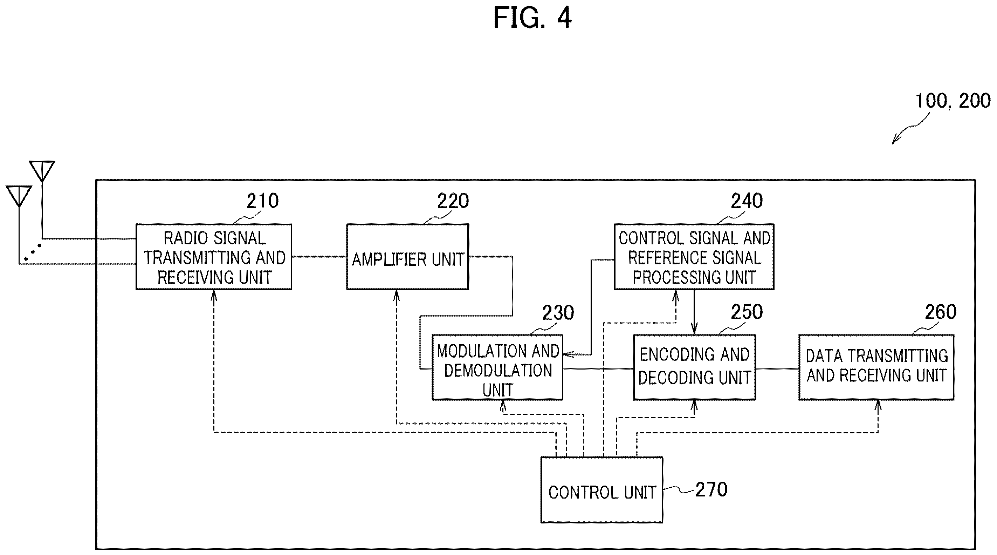

Next, a functional block configuration of the radio communication system 10 will be described. Specifically, a functional block configuration of the UE 200 will be described. Fig. 4 is a functional block configuration diagram of the gNB 100 and the UE 200.

As illustrated in FIG. 4, the UE 200 includes a radio signal transmitting and receiving unit 210, an amplifier unit 220, a modulation and demodulation unit 230, a control signal and reference signal processing unit 240, an encoding and decoding unit 250, a data transmitting and receiving unit 260, and a control unit 270.

Note that in FIG. 4, only the main functional blocks related to the description of the embodiment are shown, and the UE 200 (gNB 100) includes other functional blocks (for example, a power supply unit). FIG. 4 also illustrates the functional block configuration of the UE 200; refer to FIG. 12 for the hardware configuration.

The radio signal transmitting and receiving unit 210 transmits and receives a radio signal according to NR. The radio signal transmitting and receiving unit 210 can be compatible with Massive MIMO that generates a beam with the higher directivity by controlling radio (RF) signals transmitted from multiple antenna elements, carrier aggregation (CA) that uses multiple component carriers (CCs) in a bundle, dual connectivity (DC) that performs communication at the same time between the UE and each of two NG-RAN Nodes, and the like.

The amplifier unit 220 includes a PA (Power Amplifier) / LNA (Low Noise Amplifier) or the like. The amplifier unit 220 amplifies a signal output from the modulation and demodulation unit 230 to a predefined power level. In addition, the amplifier unit 220 amplifies an RF signal output from the radio signal transmitting and receiving unit 210.

The modulation and demodulation unit 230 executes data modulation and demodulation, transmission power setting, resource block assignment, and the like for each predefined communication destination (gNB 100 or the like). In the modulation and demodulation unit 230, Cyclic Prefix-Orthogonal Frequency Division Multiplexing (CP-OFDM) / Discrete Fourier Transform-Spread (DFT-S-OFDM) may be applied. Further, DFT-S-OFDM may be used not only for uplink (UL) but also for downlink (DL).

The control signal and reference signal processing unit 240 executes processing related to various control signals transmitted and received by the UE 200, and processing related to various reference signals transmitted and received by the UE 200.

Specifically, the control signal and reference signal processing unit 240 receives various control signals transmitted from the gNB 100 via a predefined control channel, for example, a control signal of a radio resource control layer (RRC). Further, the control signal and reference signal processing unit 240 transmits various control signals to the gNB 100 via a predefined control channel.

The control signal and reference signal processing unit 240 executes processing using a reference signal (RS) such as a Demodulation Reference Signal (DMRS) or a Phase Tracking Reference Signal (PTRS).

The DMRS is a known terminal-specific reference signal (pilot signal) between the base station and the terminal for estimating a phasing channel used for data demodulation. The PTRS is a terminal-specific reference signal designed for the purpose of estimating phase noise that is a problem in a high frequency band.

Note that, the reference signal may include a Channel State Information-Reference Signal (CSI-RS), a Sounding Reference Signal (SRS), and a Positioning Reference Signal (PRS) for position information, in addition to the DMRS and the PTRS.

In addition, the channel includes a control channel and a data channel. The control channel includes a PDCCH (Physical Downlink Control Channel), a PUCCH (Physical Uplink Control Channel), a RACH (Random Access Channel), a Downlink Control Information (DCI) including a Random Access Radio Network Temporary Identifier (RA-RNTI), a Physical Broadcast Channel (PBCH), and the like.

In addition, the data channel includes a PDSCH, a PUSCH, and the like. Data means data transmitted via the data channel.

The control signal and reference signal processing unit 240 can receive a downlink control information (DCI) transmitted from a network. Specifically, the control signal and reference signal processing unit 240 can receive a DCI according to a DCI format specified in 3GPP TS38.212. In particular, in the present embodiment, scheduling DCIs of UL and DL can be received. More specifically, the control signal and reference signal processing unit 240 may receive DCIs according to DCI formats 0_0, 0_1, 0_2, 1_0, 1_1, 1_2.

The DCI formats 0_0, 0_1, 0_2 may be interpreted as UL scheduling grant. The DCI formats 1_0, 1_1, 1_2 may be interpreted as DL scheduling assignment.

Further, the control signal and reference signal processing unit 240 may receive a DCI corresponding to the single DCI multi-slot PDSCH/PUSCH scheduling, and a DCI corresponding to the Single DCI Multi-carrier PDSCH/PUSCH scheduling.

Specifically, in the case of the single DCI multi-slot PDSCH/PUSCH scheduling, the control signal and reference signal processing unit 240 can receive a single (one) DCI for scheduling a channel(s) to be transmitted on multiple slots. In the case of the Single DCI Multi-carrier PDSCH/PUSCH scheduling, the control signal and reference signal processing unit 240 can receive a single (one) DCI (specific downlink control information) for scheduling a channel(s) to be transmitted on multiple carriers. In the present embodiment, the control signal and reference signal processing unit 240 may include a receiving unit.

Here, a channel may include a control channel and a data channel described above, and need not be particularly limited to the uplink direction or the downlink direction, but may typically mean at least one of a PDSCH or a PUSCH. A carrier may mean a component carrier (CC), or may be simply interpreted as a carrier or a subcarrier.

The DCI format applied to the single DCI multi-slot PDSCH/PUSCH scheduling and the Single DCI Multi-carrier PDSCH/PUSCH scheduling need not be particularly limited as long as it is the above-described scheduling DCI. Alternatively, a specific (new) DCI for the Single DCI Multi-carrier PDSCH/PUSCH scheduling (and/or the single DCI multi-slot PDSCH/PUSCH scheduling) may be used.

In addition, the control signal and reference signal processing unit 240 may transmit capability information of the UE 200 to a network. In particular, in the present embodiment, the control signal and reference signal processing unit 240 can transmit UE Capability Information (see FIG. 1) related to scheduling, to the gNB 100.

The encoding and decoding unit 250 performs data division and coupling, channel coding and decoding, and the like for each predefined communication destination (gNB 100 or another gNB) .

Specifically, the encoding and decoding unit 250 divides data output from the data transmitting and receiving unit 260 into predefined sizes, and performs channel coding on the divided data. Further, the encoding and decoding unit 250 decodes data output from the modulation and demodulation unit 230 and couples the decoded data.

The data transmitting and receiving unit 260 transmits and receives a Protocol Data Unit (PDU) and a Service Data Unit (SDU). Specifically, the data transmitting and receiving unit 260 performs assembly and disassembly of the PDU and SDU in multiple layers (a media access control layer (MAC), a radio link control layer (RLC), a packet data convergence protocol layer (PDCP), and the like). In addition, the data transmitting and receiving unit 260 executes error correction and retransmission control of data on the basis of HARQ (Hybrid Automatic Repeat Request).

The control unit 270 controls each functional block configuring the UE 200. In particular, in the present embodiment, the control unit 270 controls transmission or reception of a channel (for example, PDSCH/PUSCH, hereinafter, the same), based on a DCI for the single DCI multi-slot PDSCH/PUSCH scheduling.

In addition, the control unit 270 controls transmission or reception of a channel, based on a DCI (specific downlink control information) for the Single DCI Multi-carrier PDSCH/PUSCH scheduling.

As described above, the control unit 270 may control transmission or reception of a channel, based on at least one of the DCI for the single DCI multi-slot PDSCH/PUSCH scheduling or the DCI for the Single DCI Multi-carrier PDSCH/PUSCH scheduling. In addition, the single DCI multi-slot PDSCH/PUSCH scheduling and the Single DCI Multi-carrier PDSCH/PUSCH scheduling may be used simultaneously, and the control unit 270 may simultaneously perform controls based on both the scheduling DCIs in parallel.

The control unit 270 may apply a different configuration to at least one of cells, slots, or channels to be scheduled using the DCI for the single DCI multi-slot PDSCH/PUSCH scheduling and the DCI for the Single DCI Multi-carrier PDSCH/PUSCH scheduling. The cell type (primary cell (PCell), primary secondary cell (PSCell), and secondary cell (SCell)) need not be particularly limited, and a cell group (master or secondary) may be a target. The channel type is not particularly limited and may be the UL direction or the DL direction. However, here, the PDSCH/PUSCH may be a target.

In addition, the control unit 270 may assume that in frequency domain resource allocation based on a bitmap, granularity applied to a resource block group (RBG) is extended beyond granularity applied to a DCI other than the Single DCI Multi-carrier PDSCH/PUSCH scheduling. Specifically, in the Single DCI Multi-carrier PDSCH/PUSCH scheduling, the control unit 270 may assume that the granularity applied to the RBG is extended, regarding a bitmap-based Frequency Domain Resource Allocation (FDRA) field. More specifically, the bitmap-based FDRA field may mean Resource Allocation (RA) type 0. However, it is not necessarily limited to RA type 0 (for example, may be applied to RA type 1).

More specifically, an extended value may be specified for each BWP size, or a BWP size category may be added. In the Single DCI Multi-carrier PDSCH/PUSCH scheduling, the extended RBG granularity may always be applied, or it may be possible to configure which of the existing RBG granularities to apply. Specific examples of expansion of the granularity will be described below.

In frequency domain resource allocation based on interlacing, the control unit 270 may assume that granularity of resource allocation is a resource block group (RBG). Specifically, in the Single DCI Multi-carrier PDSCH/PUSCH scheduling, the control unit 270 may assume that the granularity of resource allocation is in RGB units, regarding an interlacing-based FDRA field. More specifically, the interlacing-based FDRA field may mean Resource Allocation (RA) type 2.

More specifically, resources associated with one interlace index may be multiple RBs (RBGs), and an interval M between interlaces may be specified and provided in RBG units. The value of the interval M between interlaces may be newly specified, or may be configurable using higher layer signaling or a DCI. Specific examples of the granularity will be described below.

The control unit 270 may determine a notification target cell of a field for indicating a value to only a specific cell among multiple scheduling target cells, based on an element other than the Single DCI Multi-carrier PDSCH/PUSCH scheduling (specific downlink control information). Specifically, the control unit 270 may select an appropriate option from among multiple options and then determine a notification target cell.

"A notification target cell of a field for indicating a value to only a specific cell among multiple scheduling target cells" may be interpreted as a field for indicating a value to only a specific cell among multiple scheduled destination cells, and specifically, may mean a field called Type-1C.

Fields related to the Single DCI Multi-carrier PDSCH/PUSCH scheduling may be classified as follows.

### ·Type-1 field

·Type-1A: a single field indicating common information to all co-scheduled cells
·Type-1B: a single field indicating separate information to each of co-scheduled cells via joint instruction
·Type-1C: a single field indicating an information to only one of co-scheduled cells
·Type-2 field: a separate field for each of co-scheduled cells
·Type-3 field: a common or separate field for each of co-scheduled cells or a separate field for each subgroup (hybrid of Type-1 and Type-2), dependent on an explicit configuration.

Note that options to be applied for determination of a notification target cell of Type-1C field will be described below.

The gNB 100 may also include functions corresponding to the UE 200 described above. Specifically, the gNB 100 (control signal and reference signal processing unit 240) may include a transmitting unit for transmitting a single specific downlink control information for scheduling a channel(s) to be transmitted on multiple carriers, and the gNB 100 (control unit 270) may include a control unit for executing a configuration of a specific downlink control information.

In the frequency domain resource allocation based on a bitmap, the gNB 100 (control unit 270) may extend the granularity to be applied to a resource block group beyond the granularity to be applied to downlink control information other than the specific downlink control information.

In addition, in the frequency domain resource allocation based on interlacing, the gNB 100 (control unit 270) may use the granularity of resource allocation as a resource block group.

### (3) Operation of radio communication system

Next, operation of the radio communication system 10 will be described. Specifically, operation related to the Single DCI Multi-carrier PDSCH/PUSCH scheduling, particularly an operation example that can contribute to reduction of DCI size, will be described.

### (3.1) Assumptions and issues

As described above, the radio communication system 10 may support the function of scheduling PDSCH(s)/PUSCH(s) on multiple slots, using a single (one) DCI (single DCI multi-slot PDSCH/PUSCH scheduling). The single DCI multi-slot PDSCH/PUSCH scheduling is specified in 3GPP Releases 16 and 17.

The radio communication system 10 may support the function of scheduling PDSCH (s) /PUSCH(s) on multiple CCs, using a single (one) DCI (Single DCI Multi-carrier PDSCH/PUSCH scheduling).

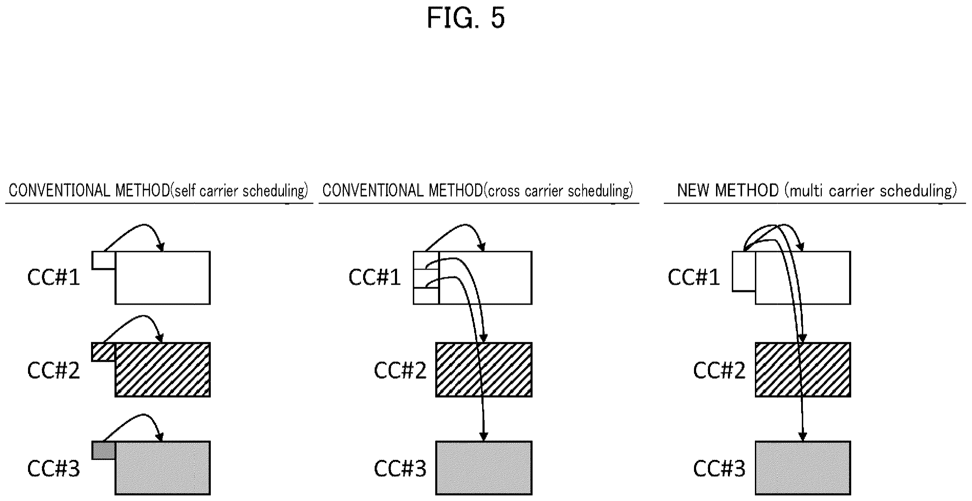

FIG. 5 illustrates an example of a scheduling method that can be supported by the radio communication system 10. The Single DCI Multi-carrier PDSCH/PUSCH scheduling has the following features when compared with the method of preparing a DCI for each CC and scheduling them one by one (conventional method) .
· (Advantage): the load (number of blind decodings (BD)) due to monitoring of DCIs (PDCCHs) can be reduced. In addition, the total PDCCH overhead can be reduced (the smaller the size of single DCI is than the conventional DCI × CC number, the more effective it is).
· (Disadvantage): the contents of instructions cannot be changed in detail for each CC (doing so would increase the size of single DCI and increase the error rate and overhead of PDCCH). When the PDCCH is incorrect, data reception for all multiple CCs fails.

In addition, in the case of the Single DCI Multi-carrier PDSCH/PUSCH scheduling, since a field in which a configuration different for each CC can be provided is included therein, there is an issue that the DCI field size becomes large, which limits applicable configurations. The maximum size of the DCI is limited to 140 bits except for CRC, and when the number of FDRA and TDRA (Time Domain Resource Allocation) fields increases, the maximum size may be exceeded.

In light of the situation, reduction of the DCI size is considered. It is necessary to reduce the DCI size without significantly compromising scheduling flexibility.

Specifically, the following points need to be considered.
· (Issue 1): reduction of RA Type 0 and RA Type 2 field sizes for FDRA fields
· (Issue 2): determination of a notification target cell of a field (Type-1 C) for indicating a value to only a specific cell among multiple scheduled destination cells In the following, focusing on such issues, an operation example that can reduce the DCI size will be described.

### (3.2) Operation example

### (3.2.1) Operation outline

In the following, by specifying a method of reducing the field size included in the Single DCI Multi-carrier PDSCH/PUSCH scheduling, flexible scheduling according to operation scenarios will be realized.

Specifically, the following operation examples may be included.
· Reduction of the field size included in the Single DCI Multi-carrier PDSCH/PUSCH scheduling
· (Corresponding to issue 1): reducing the FDRA field size (operation example 1)
·Extending RBG granularity of resource allocation for RA type0
·Causing granularity of resource allocation to be an RBG for RA type2

(Corresponding to issue 2): method of determining a notification target cell of a field (Type-1C) for indicating a value to only a specific cell among multiple scheduled destination cells (example 2)

### (3.2.2) Operation Example 1

In the Single DCI Multi-carrier PDSCH/PUSCH scheduling, the FDRA field size may be reduced. Specifically, for RA type0, the RBG granularity of resource allocation may be extended.

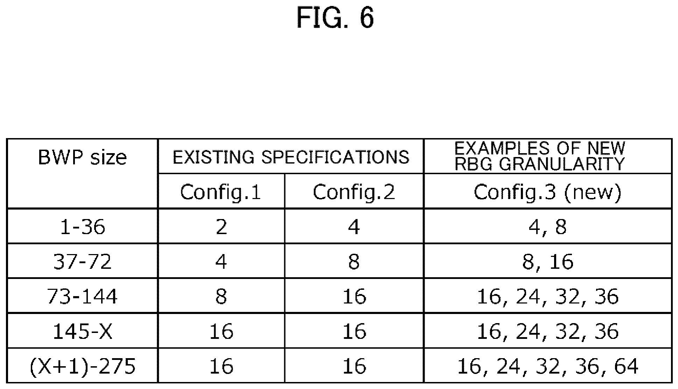

FIG. 6 illustrates a configuration example of the RBG granularity of resource allocation according to operation example 1. As illustrated in FIG. 6, an extended value may be specified for each BWP size. Alternatively, a new BWP size category (X) may be specified.

X may be, for example, 162. However, of course, a value other than 162 may also be used. In the Single DCI Multi-carrier PDSCH/PUSCH scheduling, the RBG granularity may always be applied, or it may be possible to configure which of the existing RBG granularities to be applied.

A different value may be specified depending on DL assignment (DCI format 1_X) or UL grant (DCI format 0_X). It may be possible to dynamically switch between RA type0 and RA type1 using an extended RBG granularity.

When an RBG-based RIV (Resource Indicator Value) is applied to RA type1, the RBG size used for the RIV may be applied.

For RA type2, the granularity of resource allocation may be an RBG. Specifically, resources associated with one interlace index may be multiple RBs (RBGs), and an interval M between interlaces may be specified and provided in RBG units. Interlace start position m0 may be specified and provided in RBG units.

The RBG size (the number of RBs constituting one RBG) associated with one interlace index may be specified by the 3GPP specification, or may be provided using higher layer signaling (for example, RRC) or a DCI. Here, a different value may be configured for each SCS, or a different value may be configured for each BWP size. For example, the value may be a power of 2, such as 2, 4, 8, 16, or any other value.

The value of the interval M between interlaces may be newly specified or may be configurable using higher layer signaling or a DCI. Here, a different value may be configured for each SCS, or a different value may be configured for each BWP size. For example, a value of an integer multiple of 5 may be configured, such as M = 15, 20, 25, or 50.

The interlace start position m0 may be specified by the specification or provided using higher layer signaling or a DCI. Here, a different value may be configured for each SCS, or a different value may be configured for each BWP size. The value may be a power of 2, such as 2, 4, 8, 16, or any other value.

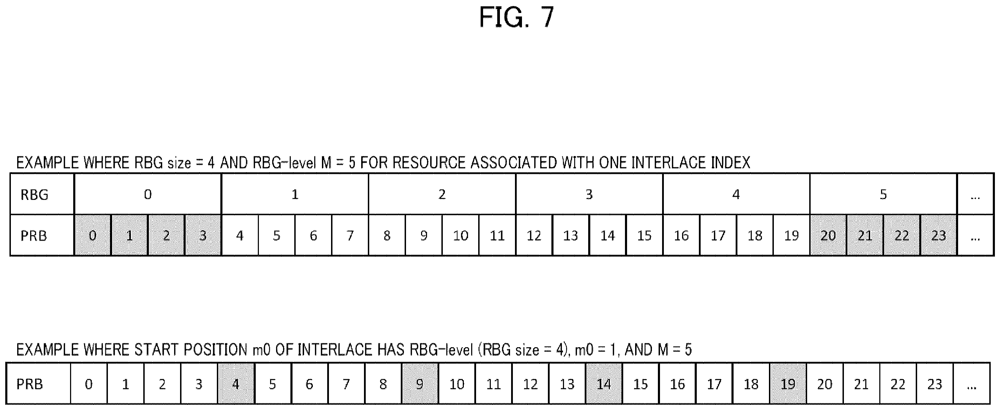

FIG. 7 illustrates an example of resource allocation using RA type 2 according to operation example 1. FIG. 7 illustrates an example of resource allocation in the case of RBG size = 4 and RBG-level M = 5 (upper row) for a resource associated with one interlace index, and an example in the case where the interlace start position m0 has RBG-level (RBG size = 4), m0 = 1, and M = 5. As illustrated in FIG. 7, for RA type2, the granularity of resource allocation may be an RBG.

In addition, UE capability signaling may be specified which reports whether or not to support a reduction method of the FDRA field size (whether or not at least some or more combinations of the above operation examples are supported (may include whether or not any option is supported)). The signaling may be any of the following: Per-UE, Per-FR, Per-TDD/FDD, Per-band, Per-BC (Band Combination), Per-FS (Feature Set), and Per-FSPC (Feature Set Per CC).

The UE 200 may report UE capability to a scheduling CC, or may report UE capability to a scheduled CC. The UE 200 may also report UE capability to a CC that transmits a PUCCH.

### (3.2.3) Operation example 2

A notification target cell of a field (Type-1 C) for indicating a value to only a specific cell among multiple scheduled destination cells may be determined as follows.

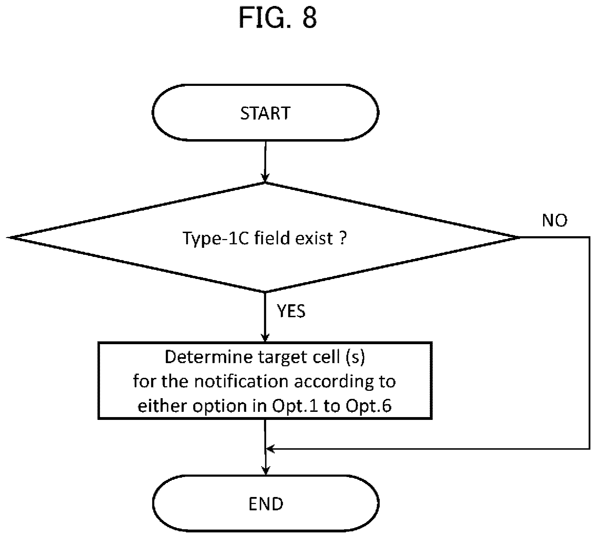

FIG. 8 illustrates an operation flow of determining a notification target cell according to operation example 2. The operation flow illustrated in FIG. 8 may be executed by the UE 200 or may be executed on the network side and notified to the UE 200.

As illustrated in FIG. 8, at least one of the following options may be applied to the determination of the Type-1C field.
·Opt.1: apply a notification of the field to a cell where a specific higher layer parameter is configured
·Opt.2: cell to which the field is applied is explicitly notified using a higher layer parameter or a DCI
·Opt.3: apply to a cell under scheduling
·Opt.4: apply to a PUCCH cell that transmits an HARQ-ACK to a PDSCH scheduled using the DCI
·Opt.5: apply to a PUSCH cell that transmits a UCI (uplink control information)
·Opt.6: the DCI field is included only when one cell is actually scheduled

Note that the number of applied destination cells may be one or more. In the case of Opt.2, a notification target cell group may be notified.

The applied destination cell may be configured individually for each DCI field, or the applied destination cell may be configured in common for multiple DCI fields.

An option application example for determining a notification target cell using a Type-1C field will be described below.

### ·CSI request

Opt.1 (a cell specified in a carrier field of RRC parameter CSI-ReportConfig), Opt.2 (a cell to which a configuration based on a CSI request is applied is explicitly notified using higher layer or a DCI), or another option may be applied.

For reportTriggerSize (size of CSI request), a value to be provided to a scheduling cell, or a value to be provided to one of scheduled destination cells may be applied.

One of the following options may be applied to a reference destination cell of CSI-MeasConfig/csi-ReportConfig.
·Opt.1: refer to a configuration of a scheduling cell
·Opt.2: refer to a configuration of a cell having the largest or smallest cell index among cells where the RRC parameter is configured
·PDCCH monitoring adaptation indication

Opt.3 may be applied. When searchSpaceGroupIdList-r17 and/or PDCCHSkippingDurationList is configured in multiple cells among scheduling cells / scheduled destination cells, any of the following options may be applied.
·Opt. 1: refer to a configutation of a scheduling cell
·Opt. 2: refer to a configuration of a cell having the largest or smallest cell index among cells where the RRC parameter is configured
·beta offset indicator

Opt.1 (a cell having RRC parameter betaOffsets where other than semiStatic is configured), opt.2 (a cell where a configuration using beta offset indicator is applied is explicitly notified by a higher layer or a DCI), opt.5, or another option may be applied. The beta_offset indicator is a parameter related to UCI multiplexing when a UCI is transmitted on a PUSCH.

For betaOffsets, when other than semiStatic is configured to multiple cells among scheduling cells / scheduled destination cells, any of the following options may be applied.
·Opt.1: refer to a configuration of a scheduling cell
·Opt.2: refer to a configuration of a cell having the largest or smallest cell index among cells where the RRC parameter is configured
·UL-SCH indicator

Opt.2 (a cell where a configuration using UL-SCH indicator is applied is explicitly notified by a higher layer or a DCI), Opt.6, or other options may be applied.

### (4) Actions and effects

According to the above-described embodiments, the size of FDRA field of the Single DCI Multi-carrier PDSCH/PUSCH scheduling can be reduced by adjusting the granularity of resource allocation based on RA type0 and RA type2. Further, by applying at least one of various options to the determination method of a notification target cell of a field (Type-1 C) for indicating a value to only a specific cell among multiple scheduled destination cells, the size of the field can be reduced.

That is, with the gNB 100 and UE 200, the size of the Single DCI Multi-carrier PDSCH/PUSCH scheduling can be reduced, and when the Single DCI Multi-carrier PDSCH/PUSCH scheduling is applied, a DCI having the reduced size can be utilized while ensuring flexibility of scheduling.

### (5) Other embodiments

Although the embodiment has been described above, the disclosure is not limited to these descriptions, and it is obvious to those skilled in the art that various modifications and improvements thereof are possible.

For example, the above-described embodiment has been described using terms of the single DCI multi-slot PDSCH/PUSCH scheduling, and the single DCI multi-carrier PDSCH/PUSCH scheduling, but the terms may be called by different names as long as they mean the function of scheduling PDSCH(s)/PUSCH(s) on multiple slots using one DCI, or the function of scheduling PDSCH(s)/PUSCH(s) on multiple CCs using a single (one) DCI. As described above, the channel is not limited to a PDSCH/PUSCH, and a control channel and/or another data channel may be a target.

In the above description, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-individual may be read interchangeably. Similarly, common, shared, group-common, UE-common, and UE-shared may be read interchangeably.

Note that the block diagrams (FIG. 4) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)", a "transmitter", and the like. The method for implementing each component is not particularly limited as described above.

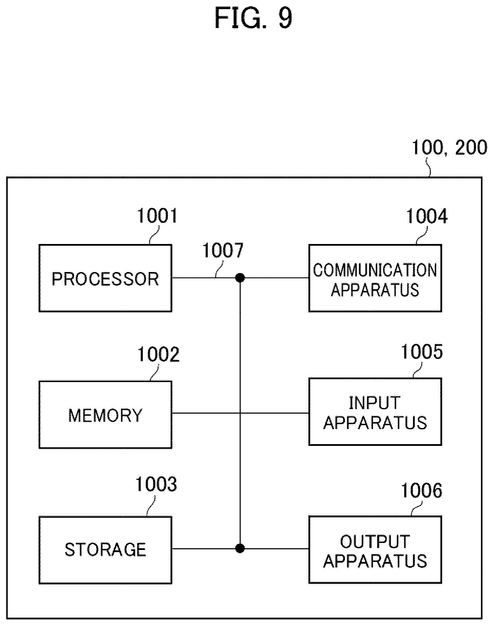

The eNB 100 and the UE 200 (apparatuses) which are described above may function as a computer that executes the processes of the radio communication method of the present disclosure. FIG. 9 is a diagram to illustrating an example of a hardware structure of the apparatuses. As illustrated in FIG. 9, the apparatuses may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a unit, and so on can be interchangeably interpreted. The hardware structure of the apparatuses may be configured to include one or more of apparatuses shown in the drawings, or may be configured not to include part of apparatuses.

Each functional block of the apparatuses (see FIG. 4) is implemented by any of hardware elements of the computer apparatus or a combination of the hardware elements.

Each function of the apparatuses is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of an optical disk such as a Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and other appropriate storage media. The storage 1003 may be referred to as "auxiliary storage apparatus". The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device", a "network controller", a "network card", a "communication module", and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the apparatuses may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB), and so on)), and other signals or combinations of these. Also, RRC signaling may be referred to as an "RRC message", and can be, for example, an RRC Connection Setup message, an RRC Connection Reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these, or combinations of these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with the base station, it is clear that various operations that are performed to communicate with the terminal can be performed by the base station, one or more network nodes (for example, MME, S-GW, and so on may be possible, but these are not limiting) other than the base station, or combinations of these. According to the above, a case is described in which there is a single network node other than the base station. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and a term required for understanding of the present specification may be replaced by a term having the same or similar meaning. For example, at least one of a channel or a symbol may be a signal (signaling). Further, a signal may be a message. Further, the Component Carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "Base Station (BS)", a "radio base station", a "fixed station", a "NodeB", an "eNB (eNodeB)", a "gNB (gNodeB)", an "access point", a "transmission point", a "reception point", a "transmission/reception point", a "cell", a "sector", a "cell group", a "carrier", a "component carrier", and so on can be used interchangeably. The base station may be referred to as the terms such as a "macro cell", a "small cell", a "femto cell", a "pico cell", and so on.

The base station can accommodate one or a plurality of (for example, three) cells (also called sectors). When the base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of the base station and a base station subsystem that provides communication services within this coverage.

In the present disclosure, the transmission of information from the base station to the terminal may be interpreted as the instruction of control or operation to the terminal based on the information by the base station.

In the present disclosure, the terms "Mobile Station (MS)", "user terminal", "User Equipment (UE)", and "terminal" may be used interchangeably.

A mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other appropriate terms in some cases.

At least one of the base station and the mobile station may be referred to as a "transmitting apparatus", a "receiving apparatus", a "radio communication apparatus", and so on. Note that at least one of the base station and the mobile station may be a device mounted on a moving object, a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of the base station and the mobile station also includes an apparatus which does not necessarily move during communication operation. For example, at least one of the base station and the mobile station may be an Internet of Things (IoT) device such as a sensor.

Furthermore, the base station in the present disclosure may be interpreted as a user station (user terminal, the same applies hereinafter). For example, each aspect/embodiment of the present disclosure may be applied to the structure that replaces a communication between the base station and the user station with a communication between a plurality of user stations (for example, which may be referred to as "Device-to-Device (D2D)", "Vehicle-to-Everything (V2X)", and the like). In this case, the user stations may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user station in the present disclosure may be interpreted as the base station. In this case, the base station may have the functions of the user station.

A radio frame may be constituted of one or a plurality of frames in the time domain. Each of one or a plurality of frames in the time domain may be referred to as a "subframe". Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a SubCarrier Spacing (SCS), a bandwidth, a symbol length, a cyclic prefix length, a Transmission Time Interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B" .

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, the base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "Sub-Carrier Group (SCG)", a "Resource Element Group (REG)", a "PRB pair", an "RB pair" and so on.

Furthermore, a resource block may be constituted of one or a plurality of Resource Elements (REs). For example, one RE may correspond to a radio resource field of one subcarrier and one symbol.

A Bandwidth Part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up, search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Furthermore, "determining" may be regarded as "assuming", "expecting", "considering", and the like.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

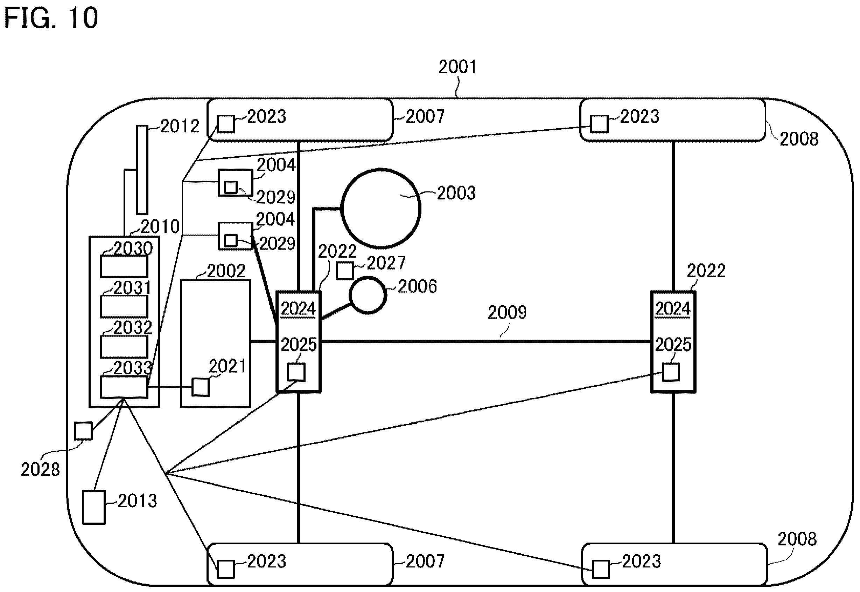

FIG. 10 illustrates an example of a configuration of a vehicle 2001. As illustrated in FIG. 10, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021 to 2027 provided in the vehicle 2001. The electronic control unit 2010 may be referred to as an ECU (Electronic control unit) .

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information services unit 2012 may include an input device that accepts an input from an external source (e.g., a keyboard, a mouse, a microphone, a switch, a button, a sensor, a touch panel, etc.) and an output device that perform output to an external source (e.g., displays, speakers, LED lamps, touch panels, etc.).

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, and an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2028 provided in the vehicle 1.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of the signals from the various sensors 2021 to 2028 input to the electronic control unit 2010, the information obtained based on the signals, and the information input from an external (user) obtained via the information service unit 2012, to an external device via wireless communication. The electronic control unit 2010, the various sensors 2021 to 2028, the information service unit 2012, and the like, may be referred to as an input unit that receives an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle. The information service unit 2012 may be referred to as an output unit that outputs information (e.g., outputs information to devices such as a display or a speaker based on the PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2028, etc., mounted in the vehicle 2001.

As described above, the present disclosure has been described in detail. It is apparent to a person skilled in the art that the present disclosure is not limited to one or more embodiments of the present disclosure described in the present specification. Modifications, alternatives, replacements, etc., of the present disclosure may be possible without departing from the subject matter and the scope of the present disclosure defined by the descriptions of claims. Therefore, the descriptions of the present specification are for illustrative purposes only, and are not intended to be limitations to the present disclosure.

### [Explanation of Reference Numerals]

- 10: radio communication system
- 20: NG-RAN
- 100: eNB
- 200: UE
- 210: radio signal transmitting and receiving unit
- 220: amplifier unit
- 230: modulation and demodulation unit
- 240: control signal and reference signal processing unit
- 250: encoding and decoding unit
- 260: data transmitting and receiving unit
- 270: control unit
- 1001: processor
- 1002: memory
- 1003: storage
- 1004: communication apparatus
- 1005: input apparatus
- 1006: output apparatus
- 1007: bus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A terminal comprising:
a receiving unit that receives a single specific downlink control information for scheduling a channel to be transmitted on a plurality of carriers; and
a control unit that controls transmission or reception of the channel, based on the specific downlink control information, wherein
the control unit assumes that, in frequency domain resource allocation based on a bitmap, granularity to be applied to a resource block group is extended beyond granularity to be applied to a downlink control information other than the specific downlink control information.

2. A terminal comprising:
a receiving unit that receives a single specific downlink control information for scheduling a channel to be transmitted on a plurality of carriers; and
a control unit that controls transmission or reception of the channel, based on the specific downlink control information, wherein
the control unit assumes that, in frequency domain resource allocation based on interlacing, granularity of resource allocation is a resource block group.

3. A terminal comprising:
a receiving unit that receives a single specific downlink control information for scheduling a channel to be transmitted on a plurality of carriers; and
a control unit that controls transmission or reception of the channel, based on the specific downlink control information, wherein
the control unit determines a notification target cell of a field for indicating a value to only a specific cell among a plurality of scheduling target cells, based on an element other than the specific downlink control information.

4. A radio base station comprising:
a transmitting unit that transmits a single specific downlink control information for scheduling a channel to be transmitted on a plurality of carriers; and
a control unit that executes a configuration of the specific downlink control information, wherein
the control unit extends, in frequency domain resource allocation based on a bitmap, granularity to be applied to a resource block group beyond granularity to be applied to a downlink control information other than the specific downlink control information.

5. A radio base station comprising:
a transmitting unit that transmits a single specific downlink control information for scheduling a channel to be transmitted on a plurality of carriers; and
a control unit that executes a configuration of the specific downlink control information, wherein
the control unit uses granularity of resource allocation as a resource block group in frequency domain resource allocation based on interlacing.
